# EUROPÄISCHE PATENTSCHRIFT

(11) **EP 0 637 567 B1**
(45) Veröffentlichungstag und Bekanntmachung des Hinweises auf die Patenterteilung: **08.04.1998**
(21) Anmeldenummer: 94112128.7
(22) Anmeldetag: 03.08.1994
(51) Int. Cl.: C01B 31/22, F25D 3/12

(54) **Kohlendioxid-Dosierung in flüssigen oder festen Substanzen**
Dispensing carbondioxide in liquid or solid substances
Dosage de dioxyde de carbone en substances liquide ou solide

(30) Priorität: 05.08.1993 AT 1563/93
(43) Veröffentlichungstag der Anmeldung: 08.02.1995
(73) Patentinhaber: Linde Gas GmbH & Co. KG., 1111 Wien (AT)
(72) Erfinder: Adler Robert, A-2201 Gerasdorf (DE)
(74) Vertreter: Kasseckert, Rainer

(56) Entgegenhaltungen:
- DE-C- 599 367
- FR-A- 2 518 237
- US-A- 2 493 759
- US-A- 3 861 168

## Beschreibung

Die Erfindung betrifft ein Verfahren zum Einbringen einer genau dosierbaren Menge Kohlendioxid in fester Form in Behälter wie Dosen oder in flüssige oder feste Substanzen, die in Behälter gefüllt sind.

Aufgrund der die Ozonschicht schädigenden Wirkung von halogenierten Kohlenwasserstoffen (FCKW) wird insbesondere für Treibmittel nach adäquaten Ersatzstoffen gesucht. Zur Herstellung von Polyurethanschaum aus Dosen kann als Treibmittel beispielsweise eine Mixtur von Propan, Butan, Kohlendioxid und einem halogenierten Kohlenwasserstoff (R22, R142b) verwendet werden. In einigen Ländern sind bestimmte Fluorkohlenwasserstoffe (R22) bereits jetzt verboten, andere (R142b) sind zu teuer, um wirtschaftlich eingesetzt zu werden. Ersatzstoffe wie Propan und Butan besitzen den Nachteil, entzündlich zu sein. Des weiteren lassen sich mit diesen Komponenten nur geringe Drücke aufbauen. Erwünscht ist daher der Einsatz von Kohlendioxid als Treibmittel, das einen hohen Dampfdruck aufweist und sich chemisch inert verhält. Außerdem ist oftmals eine gute Löslichkeit des Treibmittels in flüssigen Substanzen erwünscht, da dann bei Entspannung eine feine Versprühung der flüssigen Substanzen erfolgt. Bisher bereitet die Einbringung von Kohlendioxid in flüssige oder feste Substanzen Probleme, da sich das Kohlendioxid anfänglich nur schlecht in der Substanz löst und daher der Behälterinhalt mechanisch bewegt (rühren, schütteln) werden muß, um sukzessive größere Gasmengen in der Substanz zu lösen. Damit verbunden sind auch Probleme bei der Dosierung der genauen Gasmenge. Bei den flüssigen Substanzen handelt es sich beispielsweise um Kunststoffvorläufer (Polyol), um Lacke, um Basissubstanzen für Aerosole, aber auch um Getränke, denen CO₂ beigemischt werden soll. Bei den festen Substanzen kommt in erster Linie Silicagel in Frage oder andere Feststoffe, in denen sich Kohlendioxid speichern läßt (Kohlestaub, Getreidekörner).

In der GB-PS 1 431 591 ist eine Vorrichtung zur Erzeugung von kompaktierten CO₂-Pellets vorgeschlagen, mit der zunächst durch Entspannung von flüssigem Kohlendioxid Schnee hergestellt wird, der durch den Kontaktdruck an Federplatten gepreßt wird, um dann stangenförmig durch Austrittsöffnungen zu treten, von denen die Pellets abfallen oder abgeschnitten werden. Die Herstellung möglichst kompakter CO₂-Pellets ist im Gegensatz hierzu nicht der erwünschte Zweck vorliegender Erfindung.

Die US-PS 4 265 921 zeigt Mischer für flüssige oder pastöse Lebensmittel, auf die aus einer Entspannungsleitung austretender CO₂-Schnee fällt, der dann mit dem Lebensmittel vermischt wird. Entstehendes Kohlendioxidgas wird aus dem Mischraum über eine Leitung abgesaugt. Die dort dargestellten Vorrichtungen sind nicht geeignet, Kohlendioxid dosiert beispielsweise in Dosen einzubringen.

Aus der AT-PS 353 087 ist eine Vorrichtung zur Zugabe von Trockenschnee zu Lebensmittel bekannt, bei der der in einem Behälter erzeugte Schnee mittels rotierender Bürstenleisten aus dem offenen Behälterboden heraus befördert wird, um auf die Lebensmittel zu fallen.

Aus der FR-A-2 518 237 ist eine Vorrichtung zur Erzeugung von Kohlendioxid-Schnee bekannt, die ein zylindrisches Rohr aufweist, an dessen einem Ende eine Entspannungsdüse für flüssiges Kohlendioxid vorgesehen ist und an dessen anderem Ende sich eine Schleusenkammer befindet, in der sich der hergestellte CO₂-Schnee sammelt. CO₂-Gas kann über eine in der Nähe des Schleusenkammerbodens befindliche Leitung abgezogen werden. Durch die räumliche Nähe der CO₂-Gasableitung von dem erzeugten CO₂-Schnee kann das CO₂-Gas nur unvollständig von dem CO₂-Schnee getrennt werden. Eine genaue Dosierung der Menge von festem CO₂ ist somit nicht möglich.

Die DE-C 599 367 betrifft die Herstellung fester Kohlensäure von hohem spezifischen Gewicht. Dazu wird CO₂-Schnee durch flüssiges CO₂ zu einem CO₂-Eisblock gepreßt. Für das dosierte Einbringen von CO₂ in Behälter ist diese Vorrichtung nicht geeignet.

Die US-PS 2 493 759 beschreibt eine Vorrichtung zur Herstellung von CO₂-Schnee. Diese Vorrichtung weist allerdings keine Merkmale auf, die für eine Dosierung des CO₂-Schnees und das Einbringen des Schnees in einen Behälter geeignet wären.

In der US-PS 3 861 168 wird ebenfalls eine Vorrichtung zur CO₂-Schnee-Herstellung gezeigt. Mit Hilfe dieser Vorrichtung ist es möglich, den Inhalt von Behältern gleichmäßig mit einer Mischung aus gasförmigem und festem CO₂ abzukühlen. Eine genaue Dosierung von festem CO₂ kann damit nicht erzielt werden.

Aufgabe vorliegender Erfindung ist es nunmehr, ein verbessertes Verfahren zum Einbringen von Kohlendioxid in fester Form in Behälter wie Dosen oder in flüssige oder feste Substanzen, die in Behälter gefüllt sind, zu entwickeln, mit welchem größere Mengen Kohlendioxid als bisher genau dosierbar in die flüssigen oder festen Substanzen oder mit diesen in Behälter eingebracht werden können.

Diese Aufgabe wird erfindungsgemäß dadurch gelöst, daß flüssiges Kohlendioxid in eine Dosieranlage, welche eine Entspannungsdüse enthält, geleitet wird und das flüssige Kohlendioxid in der Entspannungsdüse, welche innerhalb eines Zylinders angebracht ist, entspannt wird, dabei entstehendes, gasförmiges Kohlendioxid durch in der Nähe der Entspannungsdüse in der Mantelfläche des Zylinders befindliche Austrittsöffnungen abgesaugt wird und das in fester Form entstehende Kohlendioxid in den Behälter oder die Substanz eingebracht wird, wobei die Menge des festen Kohlendioxids durch Wiegen oder über die Eindüsdauer bestimmt wird.

Das erfindungsgemäße Verfahren nutzt die drucklose Einbringung von Kohlendioxid in fester Form (Trockenschnee oder -eis) in eine flüssige oder feste Substanz. Die Menge an festem Kohlendioxid entsprechend der gewünschten Gasmenge ist beispielsweise durch Wiegen genau zu bestimmen. Damit kann eine genau dosierbare Menge Kohlendioxid mit der flüssigen oder festen Substanz in einem Behälter untergebracht werden. Überraschenderweise zeigt sich, daß bei den im Behälter stattfindenden Phasenübergängen des Kohlendioxids beim Übergang ins thermische Gleichgewicht das Kohlendioxid sich in der Substanz gut löst, ohne daß mechanische Hilfsmittel (z.B. Mischer) notwendig wären. Mit dem erfindungsgemäßen Verfahren läßt sich Kohlendioxid genau dosiert, drucklos und schnell in flüssige Substanzen, wie Polyolkomponenten, Lacke und Getränke, sowie in feste Substanzen wie Silicagel, einbringen.

Ein weiterer Vorteil besteht bei exothermen Reaktionen zweier in einen Behälter eingebrachter Substanzen oder einer der Substanzen mit Kohlendioxid. In diesem Fall wird zumindest ein Teil der freiwerdenden Energie zur Phasenumwandlung des festen Kohlendioxids verwendet und eine unerwünschte Überhitzung des Behälters kann vermieden werden.

In einer vorteilhaften Ausführungsform wird zuerst Kohlendioxidschnee und anschließend die flüssige oder feste Substanz in den Behälter gefüllt. Dabei kann der Behälter mit einer vorbestimmten Menge Kohlendioxidschnee drucklos gefüllt werden, der geeigneterweise über Entspannung flüssigen Kohlendioxids hergestellt wird. Die Menge Kohlendioxidschnee läßt sich über die Einfülldauer oder über Wiegen genau bestimmen. Entstehendes Kohlendioxidgas, das bei der Entspannung flüssigen Kohlendioxids zum überwiegenden Teil entsteht, sollte abgesaugt werden, um eine Gefährdung des Bedienpersonals zu vermeiden.

Bei dem erfindungsgemäßen Verfahren wird flüssiges Kohlendioxid aus einem CO₂-Vorratsbehälter über eine Leitung zur Entspannungsdüse in der Dosieranlage geleitet. Öffnet sich diese Düse, entspannt das flüssige CO₂ und es entsteht Kohlendioxidschnee und -gas. Der Trockenschnee kann nahezu drucklos in den Behälter eingebracht werden, wenn das entstehende Kohlendioxidgas abgesaugt wird. Dazu ist ein Zylinder vorgesehen, der die Entspannungsdüse koaxial umschließt, und der Austrittsöffnungen aufweist, durch die aus der Entspannungsdüse austretendes Kohlendioxidgas entweichen oder abgesaugt werden kann. Weitere Austrittsöffnungen in diesem Zylinder ermöglichen das Einbringen von Kohlendioxidschnee in den dafür vorgesehenen Behälter.

Die Mantelfläche des Zylinders weist in der Nähe der Entspannungsdüse Austrittsöffnungen für die Absaugung von Kohlendioxidgas auf. In der Nähe der Entspannungsdüse besitzt der Kohlendioxidschnee genügend kinetische Energie, so daß er bei Absaugung des entstehenden Kohlendioxidgases nicht mitgesaugt wird. Der Schnee bewegt sich weiter stromabwärts im Zylinder, den er dann durch die dafür vorgesehenen Austrittsöffnungen verläßt.

Es ist vorteilhaft, den Kohlendioxidschnee zu kompaktieren, damit er eine gröbere Struktur mit größerer Masse aufweist und leichter vom Kohlendioxidgas getrennt werden kann. Zu diesem Zweck wird an der Entspannungsdüse eine Prallplatte angebracht, auf die der Kohlendioxidschnee zunächst aufprallt, konglomeriert, um dann in festerer Form weitergetragen zu werden.

Diese Art der Konglomerierung kann fortgesetzt werden, wenn innerhalb des die Entspannungsdüse umgebenden Zylinders und/oder an dessen stromabwärts liegender Stirnseite eine oder mehrere Prallplatten angebracht sind.

In einer vorteilhaften Ausgestaltung ist die stromabwärts liegende Stirnseite des Zylinders mit einer Prallplatte vollständig verschlossen und die Mantelfläche des Zylinders weist in Nähe dieser Prallplatte Austrittsöffnungen für den Kohlendioxidschnee auf. Der kompaktierte Kohlendioxidschnee wird dann durch die zuletzt genannten Austrittsöffnungen in den vorgesehenen Behälter eingebracht. Diese Einbringung erfolgt nahezu drucklos und nicht direkt in das Zentrum des Behälterinneren, sondern eher in Richtung auf die inneren Behälterwände. Dies hat Vorteile, wenn der Behälter bereits mit einer flüssigen Substanz gefüllt ist.

Weitere vorteilhafte Ausgestaltungen sind dadurch gegeben, daß die Dosieranlage pneumatisch in Richtung auf den Behälter für die flüssige Substanz bewegbar ist, und daß die Entspannungsdüse in der Dosieranlage pneumatisch zu öffnen ist. Der Zylinder der Dosieranlage kann dann zur CO₂-Beladung jeweils über die Behälteröffnung oder in den Behälter gefahren werden, wobei dann die Entspannungsdüse eine vorgegebene Zeit geöffnet wird. Das geschilderte Verfahren läßt sich mit einer dergestalt ausgeführten Vorrichtung taktweise mit kurzen Taktzeiten in einem Massenproduktionsbetrieb einsetzen.

Im folgenden soll ein Ausführungsbeispiel anhand zweier Zeichnungen ein Verfahren gemäß Erfindung näher erläutern.

Figur 1 zeigt schematisch eine Vorrichtung zur Dosierung von Kohlendioxidschnee für die Einbringung von Kohlendioxid in feste oder flüssige Substanzen in Behälter.

Figur 2 zeigt schematisch eine Detailansicht der Dosieranlage 2.

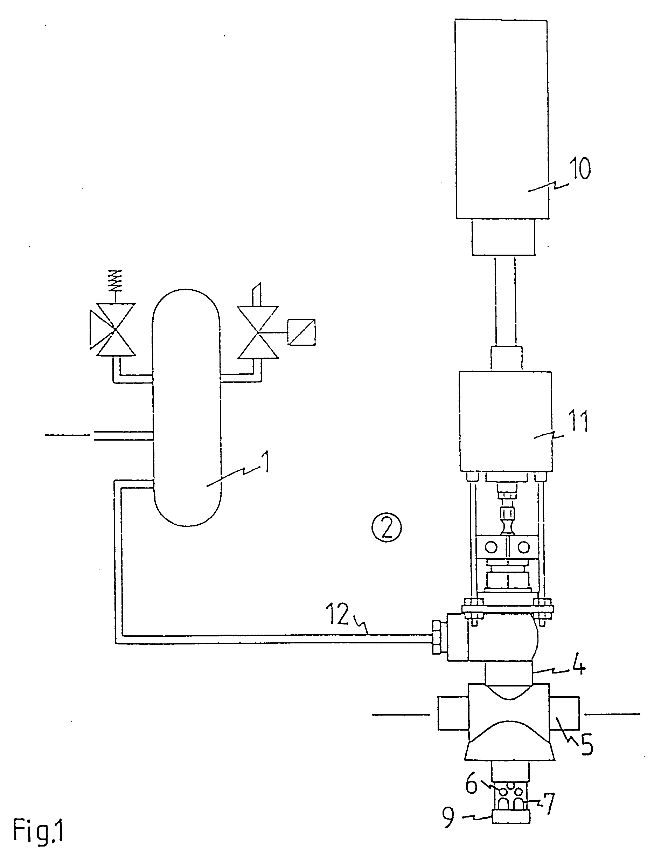

In **Figur 1** ist ein Kohlendioxid-Vorratsbehälter 1 dargestellt, der als Pufferspeicher fungiert und seinerseits mit verflüssigtem CO₂ versorgt wird, wobei der Füllspiegel konstant gehalten wird. Die Dosieranlage 2 erhält über Leitung 12 flüssiges Kohlendioxid aus dem Kohlendioxid-Vorratsbehälter 1. Mittels zweier Pneumatikzylinder 10 und 11 läßt sich die Dosieranlage 2 in vertikaler Richtung auf den mit Kohlendioxid zu füllenden Behälter bewegen und die Entspannungsdüse 3, aus der Kohlendioxidschnee austritt, öffnen und schließen. Der Zylinder 4 umgibt diese Entspannungsdüse 3 und weist Austrittsöffnungen 5 auf, durch die bei der Entspannung flüssigen Kohlendioxids entstehendes Kohlendioxidgas abgesaugt werden kann. Im stromabwärts gelegenen Teil des Zylinders 4 sind weiter Austrittsöffnungen 6 und 7 für Kohlendioxidgas bzw. -schnee vorgesehen. Die Prallplatte 9 sorgt für die Kompaktierung des Schnees und verschließt den Zylinder 4.

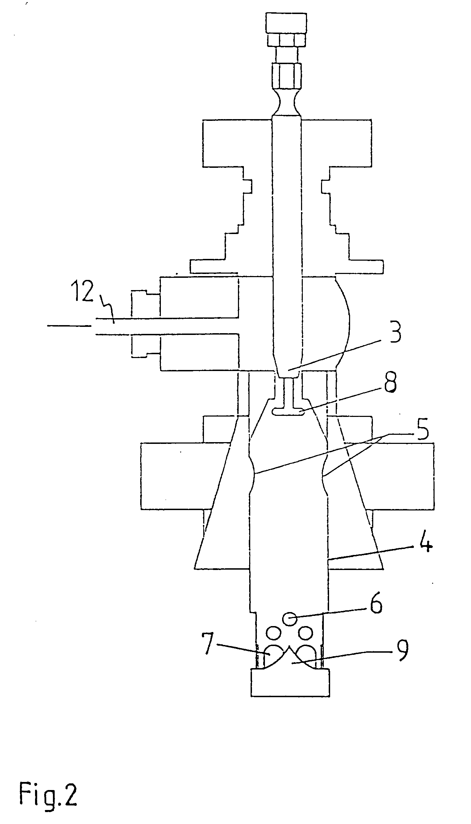

In **Figur 2** ist eine Detailansicht der Dosieranlage 2 dargestellt mit der Zuführungsleitung 12 für flüssiges Kohlendioxid, der Entspannungsdüse 3 und dem Zylinder 4. Der Entspannungsdüse 3 gegenüber befindet sich die erste Prallplatte 8, die den austretenden Schnee kompaktiert, so daß größere, schwerere Schneestücke weitertransportiert werden. Die Austrittsöffnungen 5 dienen zur Absaugung von Kohlendioxidgas, das bei der Entspannung von verflüssigtem Kohlendioxid von 64 bar auf Atmosphärendruck zu etwa 70 % entsteht. Die Prallplatte 9, die die eine Stirnfläche des Zylinders 4 vollständig verschließt, sorgt vor Einfüllung des CO₂-Schnees in den Behälter nochmals für dessen Kompaktierung. Durch die Austrittsöffnungen 7 gelangt der CO₂-Schnee schließlich in den Behälter, während aus den Austrittsöffnungen 6 weiteres CO₂-Gas strömt. Die Absaugung des Kohlendioxidgases im oberen Teil des Zylinders 4 dient zum einen der Betriebssicherheit für das Bedienpersonal, zum anderen zur Reduzierung der durch die hohen Gasgeschwindigkeiten verursachten Geräusche.

Die beschriebene Vorrichtung dient in diesem Ausführungsbeispiel zur Dosierung und Einbringung von Kohlendioxid als Treibmittel in Polyurethanschaum-Dosen. Die zunächst leere Dose wird unterhalb des Zylinders 4 der Dosieranlage 2 in Stellung gebracht, die Dosieranlage 2 nach unten gefahren, so daß der untere Teil des Zylinders 4 in die Dose hineinragt, anschließend das Ventil der Entspannungsdüse 3 geöffnet und gleichzeitig die Absaugung des Kohlendioxidgases in Betrieb genommen. Die Dosierung der gewünschten Menge an Kohlendioxid erfolgt über die Eindüszeit, die vorher mit der Kohlendioxidmenge korreliert wird. Die Dosierungsgenauigkeit beträgt etwa 1 %, die Eindüszeit liegt je nach gewünschter Kohlendioxidmenge zwischen 0,4 und 1 Sekunde.

Die Dose wird mit CO₂-Schnee gefüllt und gelangt dann zu weiteren Füllstationen, wo weitere Treibmittel und die Polyolkomponenten in die Dose eingefüllt werden. Die Polyolkomponenten reagieren in der geschlossenen Dose exotherm, wodurch Temperaturen von über 50°C entstehen können. Die CO₂-Einbringung in Form von Trockenschnee bewirkt, daß ein Teil dieser freiwerdenden Energie zur Sublimation des kalten (-78°C) Schnees verwendet wird, wodurch sich die Dose nicht mehr so stark erwärmt. Zusammen mit den übrigen Treibmittelzusätzen wird ein Gesamtdosendruck von 10 bis 12 bar erreicht.

Mittels dieses Verfahrens lassen sich größere Mengen Kohlendioxid als bisher als Treibmittel in die Polyurethanschaum-Dosen einbringen. Außerdem löst sich während der Sublimation des Trockenschnees das Kohlendioxid hervorragend in den in der Dose befindlichen flüssigen Schaumkomponenten, ohne daß die Dose oder deren Inhalt (wie bisher) mechanisch bewegt werden müßte.

## Patentansprüche

1. Verfahren zum drucklosen Einbringen einer genau dosierbaren Menge von Kohlendioxid in fester Form in Behälter wie Dosen oder in flüssige oder feste Substanzen, die in Behälter gefüllt sind, **dadurch gekennzeichnet, daß** flüssiges Kohlendioxid in eine Dosieranlage, welche eine Entspannungsdüse enthält, geleitet wird und das flüssige Kohlendioxid in der Entspannungsdüse, welche innerhalb eines Zylinders angebracht ist, entspannt wird, dabei entstehendes, gasförmiges Kohlendioxid durch in der Nähe der Entspannungsdüse in der Mantelfläche des Zylinders befindliche Austrittsöffnungen abgesaugt wird und das in fester Form entstehende Kohlendioxid durch weiter stromabwärts im Zylinder vorgesehene Austrittsöffnungen in den Behälter oder die Substanz eingebracht wird, wobei die Menge des festen Kohlendioxids durch Wiegen oder über die Eindüsdauer bestimmt wird.

2. Verfahren nach Anspruch 1, dadurch gekennzeichnet, daß zuerst das feste Kohlendioxid und anschließend die flüssige oder feste Substanz in den Behälter gefüllt werden.

3. Verfahren nach einem der Ansprüche 1 oder 2, dadurch gekennzeichnet, daß das in fester Form entstehende Kohlendioxid durch eine an der Entspannungsdüse angebrachte Prallplatte verdichtet wird.

4. Verfahren nach einem der Ansprüche 1 bis 3, dadurch gekennzeichnet, daß das in fester Form entstehende Kohlendioxid durch eine oder mehrere innerhalb des die Entspannungsdüse umgebenden Zylinders und/oder an dessen stromabwärts liegender Stirnseite angebrachte Prallplatten verdichtet wird.

5. Verfahren nach einem der Ansprüche 1 bis 4, dadurch gekennzeichnet, daß die Entspannungsdüse pneumatisch geöffnet wird.

6. Verfahren nach einem der Ansprüche 1 bis 5, dadurch gekennzeichnet, daß die Dosieranlage pneumatisch in Richtung auf den Behälter für die flüssige oder feste Substanz bewegt wird.

## Claims

1. Process for the unpressurized introduction of a precisely measurable amount of carbon dioxide in solid form into containers such as cans or into liquid or solid substances which are packed in containers, characterized in that liquid carbon dioxide is passed into a metering unit which includes an expansion nozzle, and the liquid carbon dioxide is expanded in the expansion nozzle which is mounted within a cylinder, in which case resulting gaseous carbon dioxide is removed by suction through outlet orifices situated in the vicinity of the expansion nozzle in the curved surface of the cylinder, and the resulting carbon dioxide in solid form is introduced into the container or the substance through outlet orifices provided further downstream in the cylinder, the amount of the solid carbon dioxide being determined by weighing or via the injection period.

2. Process according to Claim 1, characterized in that first the solid carbon dioxide and then the liquid or solid substance are packed in the container.

3. Process according to one of Claims 1 or 2, characterized in that the resulting carbon dioxide in solid form is compressed by a baffle plate mounted at the expansion nozzle.

4. Process according to one of Claims 1 to 3, characterized in that the resulting carbon dioxide in solid form is compressed by one or more baffle plates mounted within the cylinder surrounding the expansion nozzle and/or baffle plates mounted at the downstream end of the cylinder.

5. Process according to one of Claims 1 to 4, characterized in that the expansion nozzle is opened pneumatically.

6. Process according to one of Claims 1 to 5, characterized in that the metering unit is pneumatically moved in the direction towards the container for the liquid or solid substance.

## Revendications

1. Procédé d'introduction sans pression d'une quantité exactement dosable de dioxyde de carbone sous forme solide dans des récipients comme des boîtes ou dans des substances liquides ou solides, qui sont versées dans des récipients, caractérisé en ce que l'on conduit le dioxyde de carbone liquide dans une installation de dosage, qui contient une buse de détente, et en ce que l'on détend le dioxyde de carbone liquide dans la buse de détente qui est disposée à l'intérieur d'un cylindre, que l'on aspire le dioxyde de carbone gazeux, qui apparaît de ce fait, par des orifices de sortie se trouvant à proximité de la buse de détente dans la surface d'enveloppe du cylindre, et que l'on introduit le dioxyde de carbone, qui apparaît sous forme solide dans les récipients ou dans la substance, par des orifices de sortie prévus plus loin en aval dans le cylindre, la quantité de dioxyde de carbone solide étant déterminée par une pesée ou par l'intermédiaire de la durée d'injection.

2. Procédé selon la revendication 1, caractérisé en ce que l'on verse dans les récipients tout d'abord le dioxyde de carbone solide et ensuite la substance liquide ou solide.

3. Procédé selon l'une quelconque des revendications 1 ou 2, caractérisé en ce que l'on comprime le dioxyde de carbone qui apparaît sous forme solide à l'aide d'une chicane montée sur la buse de détente.

4. Procédé selon l'une quelconque des revendications 1 à 3, caractérisé en ce que l'on comprime le dioxyde de carbone qui apparaît sous forme solide à l'aide d'une ou de plusieurs chicanes montées à l'intérieur du cylindre entourant la buse de détente et/ou à la face frontale, située en aval, de ce dernier.

5. Procédé selon l'une quelconque des revendications 1 à 4, caractérisé en ce que l'on ouvre la buse de détente de manière pneumatique.

6. Procédé selon l'une quelconque des revendications 1 à 5, caractérisé en ce que l'on déplace l'installation de dosage de manière pneumatique en direction des récipients pour la substance liquide ou solide.
